**Europäisches Patentamt**

**European Patent Office**

**Office européen des brevets**

(19)

(11) Veröffentlichungsnummer : **0 419 807 B1**

(12) # EUROPÄISCHE PATENTSCHRIFT

(45) Veröffentlichungstag der Patentschrift :
**11.11.92 Patentblatt 92/46**

(51) Int. Cl.$^5$ : **B60K 15/035**

(21) Anmeldenummer : **90114650.6**

(22) Anmeldetag : **31.07.90**

(54) **Entlüftungsleitung für einen Kraftstoffbehälter eines Kraftfahrzeuges.**

(30) Priorität : **27.09.89 DE 3932194**

(43) Veröffentlichungstag der Anmeldung :
**03.04.91 Patentblatt 91/14**

(45) Bekanntmachung des Hinweises auf die
Patenterteilung :
**11.11.92 Patentblatt 92/46**

(84) Benannte Vertragsstaaten :
**DE ES FR GB IT**

(56) Entgegenhaltungen :
**EP-A- 0 067 570**
**EP-A- 0 133 458**

(56) Entgegenhaltungen :
**DE-A- 3 224 338**
**FR-A- 2 337 486**
**FR-A- 2 561 594**
**US-A- 3 006 358**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Stöcker, Wilfried
Hildeboldstrasse 3
W-8000 München 40 (DE)**
Erfinder : **Klaffki, Heinz
St.-Ulrichstrasse 27
W-89044 Unterschleissheim (DE)**

EP 0 419 807 B1

**Beschreibung**

Die Erfindung betrifft eine Entlüftungsleitung für einen Kraftstoffbehälter eines Kraftfahrzeuges, die an der Oberseite des Kraftstoffbehälters angeordnet ist. Insbesondere kann die Entlüftungsleitung an einem Kunststoff-Kraftstoffbehälter angeordnet sein, der eine linke und eine rechte Kammer aufweist, die über einen Überlaufkanal miteinander verbunden sind.

Zur Erhöhung der Fahrzeugsicherheit beim Heckaufprall werden Kraftstoffbehälter üblicherweise vor der Hinterachse unter dem Rücksitz montiert. Die Kraftstoffbehälter, insbesondere solche aus Kunststoff, weisen an der Oberseite eine Anlagefläche zur Karosserie auf, über die sie fest mit dem Sitzkasten verspannt werden. Bei bestimmten Fahrzeugtypen ist der Kraftstoffbehälter in zwei Kammern aufgeteilt, die über einen Überlaufkanal oder eine Überlaufleitung miteinander verbunden sind. Die Form des Kraftstoffbehälters und damit die Querschnittsfläche des Überlaufkanals ergibt sich aus der Größe der darunter angeordneten Fahrzeugteile, wie beispielsweise eine Gelenkwelle oder ein Hinterachsgetriebe. Der Querschnitt des Überlaufkanals darf aus Sicherheitsgründen jedoch nicht zu klein gewählt werden, um Festigkeitsprobleme beim Falltest und im Fahrbetrieb auszuschließen. Ferner ist es bei in zwei Kammern aufgeteilten Kraftstoffbehältern meistens notwendig, daß die Entlüftung in der Kammer erfolgt, die beim Betankungsvorgang zuletzt gefüllt wird. Darüber hinaus ist bei der Auslegung von Kraftstoffbehältern zu berücksichtigen, daß sich diese durch Überdruck teilweise stark aufblähen bzw. verformen. Aus diesem Grund muß der Abstand zwischen der auf der Oberseite des Kraftstoffbehälters angeordneten Entlüftungsleitung und der Karosserie relativ groß sein. Um ein Eindrücken der Entlüftungs-leitung zu verhindern, wird die Entlüftungsleitung auf der Kraftstoffbehälteroberseite in einer im Kraftstoffbehälter ausgeformten Aussparung verlegt, so daß die Entlüftungsleitung im montierten Zustand nicht mit der Karosserie in Kontakt kommt. Durch diese Aussparung wird jedoch der Querschnitt des Überlaufkanals erheblich verringert, so daß aus Festigkeitsgründen in der Regel ein einteiliger Kraftstoffbehälter nicht mehr möglich ist. Ein zweigeteilter Kraftstoffbehälter hat jedoch Betankungs- und Entlüftungsprobleme sowie einen erheblichen Mehraufwand bei der Montage zur Folge. Ferner kommt es durch die Querschnittsverringerung zur Bildung von Hohlräumen, in denen sich selbst bei vollständiger Betankung Luftpolster bilden.

Aufgabe der Erfindung ist es, eine Entlüftungsleitung anzugeben, die es ermöglicht, daß ein Kraftstoffbehälter, insbesondere in einteiliger Ausführung mit zwei Kammern und ggf. aus Kunststoff, einsetzbar ist, ohne daß die oben genannten Nachteile auftreten.

Diese Aufgabe wird erfindungsgemäß durch die Merkmale des kennzeichnenden Teils des Anspruchs 1 gelöst.

Die Herstellung der Entlüftungsleitung aus einem formstabilen Werkstoff ermöglicht es, daß die Entlüftungsleitung gleichzeitig als Abstützung des Kraftstoffbehälters gegenüber der Karosserie verwendet werden kann. Durch die Befestigung der Entlüftungsleitung am Kraftstoffbehälter über ein Fest- und ein Loslager, können in einfacher Weise die Verschiebungen des Kraftstoffbehälters bzw. dessen Verformungen ausgeglichen werden. Die Festigkeit der Entlüftungsleitung ist so ausgelegt, daß ein Eindrücken der Entlüftungsleitung nicht möglich ist. Aufgrund dieser Bauweise muß im Kraftstoffbehälter keine Aussparung zur Aufnahme der Entlüftungsleitung ausgebildet sein muß. Daraus ergibt sich, daß der Querschnitt des Überlaufkanals größer und damit stabiler ist und daß ferner die Entlüftung des Kraftstoffbehälters an der höchsten Stelle durchführbar ist, wodurch ein größeres Volumen zur Verfügung steht. Ferner werden im Kraftstoffbehälter Luftpolster in nicht befüllbaren Räumen vermieden. Die direkte Anlage der Entlüftungsleitung an der Karosserie führt zu einer optimalen Ausnutzung des im Heckbereich des Fahrzeuges zur Verfügung stehenden Raumes.

Eine Ausführungsform der Erfindung wird nachstehend anhand der Zeichnungen beispielshalber beschrieben. Dabei zeigen:

Fig. 1 eine Ansicht von oben eines mit einer Entlüftungsleitung versehenen Kraftstoffbehälters,
Fig. 2 eine teilweise geschnittene Ansicht des mit einer Entlüftungsleitung versehenen Kraftstoffbehälters von hinten und
Fig. 3 eine Ansicht der Entlüftungsleitung im Schnitt längs der Linie I-I in der Fig. 1.

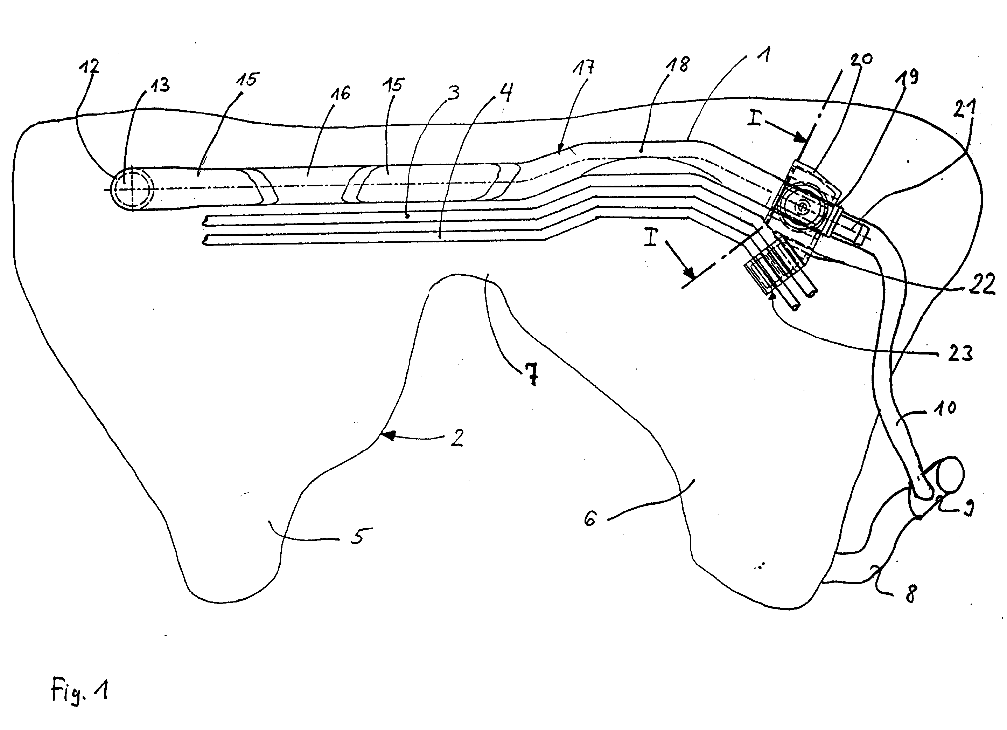

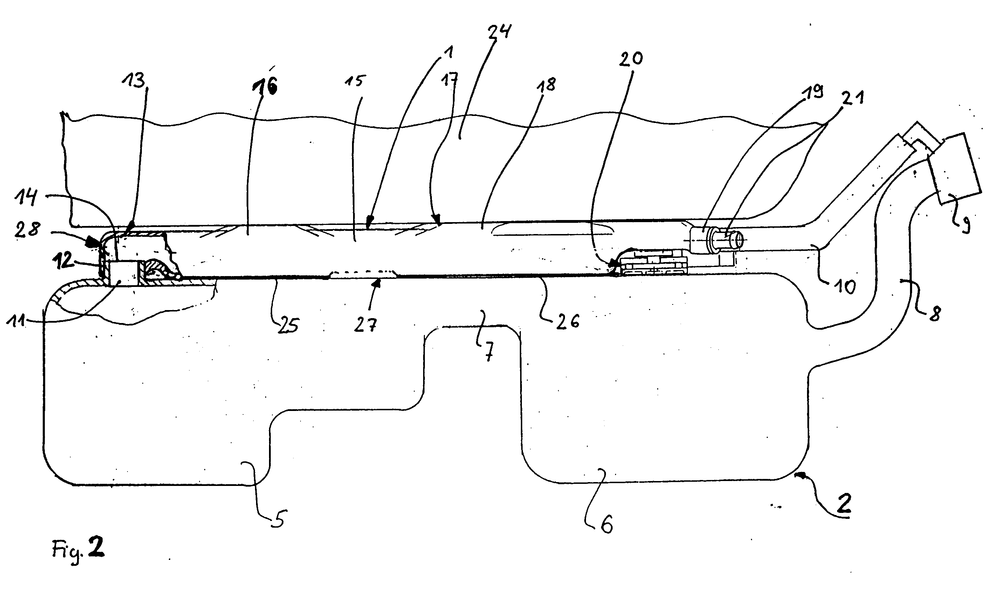

Die Fig. 1 zeigt einen mit einer Entlüftungsleitung 1 versehenen Kraftstoffbehälter 2, sowie auf dem Kraftstoffbehälter angeordnete Kraftstoffleitungen 3 und 4. Der Kraftstoffbehälter 2 besteht aus zwei, in der Draufsicht dreieck- oder trapezförmigen Kammern 5 und 6, die über einen Überlaufkanal 7 einstückig miteinander verbunden sind. An der rechten Kammer 6 ist ein Einfüllrohr 8 mit einem Einfüllstutzen 9 angeordnet, an den die Entlüftungsleitung 1 über einen Schlauch oder dergleichen 10 angeschlossen ist. Wie aus den Fig. 1 und 2 hervorgeht, weist der Kraftstoffbehälter 2 an der Oberseite der linken Kammer 5 eine mit einem Verbindungsstutzen 12 versehene Entlüftungsöffnung 11 auf. Die Entlüftungsöffnung 11 ist an der höchsten Stelle des Kraftstoffbehälters 2 ausgebildet, so daß eine vollständige Entlüftung möglich ist. Auf diesen Verbindungsstutzen 12 ist das mit einer Eintrittsöffnung 14 versehene Ende 13 der Entlüftungsleitung aufgeschweißt oder in sonstiger geeigneter Weise fest und dicht angeordnet. Die feste Verbindung zwischen dem am Kraftstoffbehälter 1 angeordneten Verbindungsstutzen 12 und dem Ende 13 der Entlüftungsleitung 1 bildet ein Festlager 28. An das in dieser Ausführungsform als ein 90°-Winkelrohr ausgebildete Ende 13 schließt sich ein geradliniger und waagrecht verlaufender Abschnitt 15 an, der in seinem mittleren Bereich eine obere Auflagefläche 16 aufweist. Dem waagrechten Abschnitt 15 folgt ein bogenförmig in Richtung des Einfüllrohres 8 gekrümmter, waagrecht verlaufender Abschnitt 17, über dessen gesamte Länge sich eine obere Auflagefläche 18 erstreckt. Am Ende 19 des bogenförmigen Abschnittes 17 bzw. der oberen Auflagefläche 18 ist die Entlüftungsleitung 1 über ein Loslager 20 mit dem Kraftstoffbehälter 2 verbunden. Ferner ist eine Halterung 21 am Ende 19 der Entlüftungsleitung für den Schlauch 10 angeformt. Am Loslager 20 ist einstückig ein Arm 22 ausgebildet, an dem Befestigungseinrichtungen 23 für die Kraftstoffleitungen 3, 4 angeordnet sind.

Aus der Fig. 2 geht hervor, daß die Entlüftungsleitung 1 sowohl an der Karosserie 24 über die oberen Auflageflächen 16 und 18 als auch an der Oberseite des Kraftstoffbehälters 2 über untere Auflageflächen 25 und 26 anliegt. In einer anderen Ausführungsform kann die Entlüftungsleitung 1 über ihre gesamte Unterseite 27 auf der Kraftstoffbehälter-Oberseite aufliegen.

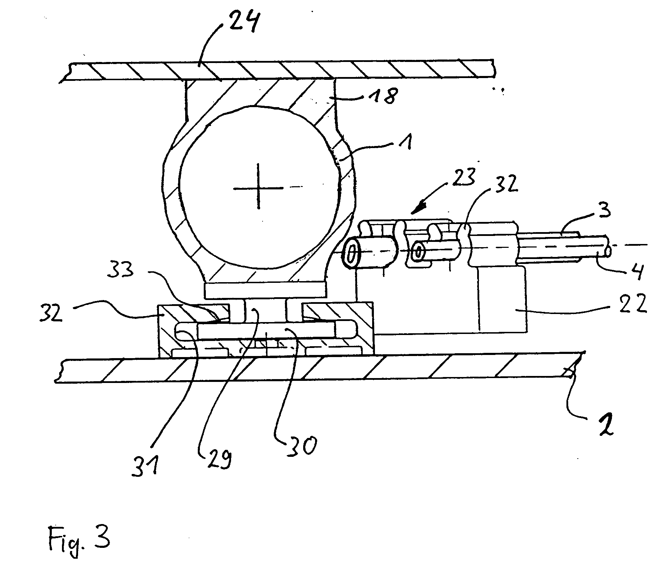

Wie insbesondere aus der Fig. 3 ersichtlich ist, besteht das Loslager 20 aus einem Führungszapfen 29, der ein verbreitertes Ende 30 aufweist. Der Führungszapfen 29 und dessen Ende 30 sind mit Spiel in der horizontalen Ebene in einer entsprechend ausgebildeten Führungsnut 31 verschiebbar angeordnet. Die am Arm 22 angeformten Befestigungseinrichtungen 23 bestehen aus nach oben gerichteten, elastischen Klemmarmen 32. Ferner geht aus der Schnittdarstellung der Fig. 3 hervor, daß das Gehäuse 32, in dem die ⊥-förmige Führungsnut 31 ausgebildet ist, eine Anphasung 33 zur besseren Montage des Führungszapfenendes 30 aufweist. Das Gehäuse 32 ist an der Oberseite des Kraftstoffbehälters 1 angeschweißt oder in einer sonstigen Weise befestigt.

## Patentansprüche

1. Entlüftungsleitung für einen Kraftstoffbehälter eines Kraftfahrzeuges, die an der Oberseite des Kraftstoffbehälters angeordnet ist, dadurch gekennzeichnet, daß die Entlüftungsleitung (1) aus einem formstabilen Werkstoff besteht und an ihrem einen Ende (13) über ein Festlager (28) an den Kraftstoffbehälter (2) angeschlossen und an dem dazu gegenüberliegenden Ende (19) über ein Loslager (20) mit dem Kraftstoffbehälter (2) verbunden ist.

2. Entlüftungsleitung nach Anspruch 1, dadurch gekennzeichnet, daß die Entlüftungsleitung (1) im eingebauten Zustand über an ihrer Oberseite angeformte Auflageflächen (16 und 18) an der Karosserie (24) und über ihre Unterseite (27) bzw. über dort ausgebildete Auflageflächen (25, 26) an der Oberseite des Kraftstoffbehälters (2) aufliegt.

3. Entlüftungsleitung nach den Ansprüchen 1 oder 2, dadurch gekennzeichnet, daß das Festlager (28) aus einem am Kraftstoffbehälter (2) angeformten oder befestigten Verbindungsstutzen (12) besteht, an dem das entsprechend geformte Ende (13) der Entlüftungsleitung (1) dicht befestigt ist.

4. Entlüftungsleitung nach einem oder mehreren der vorhergehenden Ansprüche, dadurch gekennzeichnet, daß das Loslager (20) aus einem an der Entlüftungsleitung (1) angeformten oder befestigten Führungszapfen (29) besteht, der ein verbreitertes Ende (30) aufweist, wobei der Führungszapfen (29) und dessen Ende (30) in einer in einem Gehäuse (32) ausgebildeten Führungsnut (31) mit Spiel in der horizontalen Ebene geführt ist.

5. Entlüftungsleitung nach einem oder mehreren der vorhergehenden Ansprüche, dadurch gekennzeichnet, daß das Loslager (20) einen seitlich abstehenden Arm (22) aufweist, an dem mindestens eine Befestigungseinrichtung (23) für weitere Leitungen (3, 4) ausgebildet sind.

6. Entlüftungsleitung nach einem oder mehreren der vorhergehenden Ansprüche, dadurch gekennzeichnet, daß die Entlüftungsleitung (1) und-/oder der Kraftstoffbehälter (2) aus Kunststoff hergestellt ist.

## Claims

1. A vent tube for a fuel tank of a motor vehicle, which conduit is arranged on the upper side of the fuel tank, characterised in that the vent tube (1) is formed of a material of stable form and is attached at its one end (13) through a fixed bearing (28) to the fuel tank (2) and is connected at the end (19) opposite thereto through a free bearing (20) with the fuel tank (2).

2. A vent tube according to Claim 1, characterised in that the vent tube (1) in the installed condition rests through support surfaces (16 and 18) formed on its upper side on the body (24) and through its under side (27), or by way of support surfaces (25, 26) formed there, on the upper side of the fuel tank (2).

3. A vent tube according to either one of Claims 1 and 2, characterised in that the fixed bearing (28) comprises a connection support (12) formed or secured on the fuel tank (2) , to which support the correspondingly-formed end (13) of the vent tube (1) is tightly secured.

4. A vent tube according to any one or more of the preceding Claims, characterised in that the free bearing (20) comprises a guide peg (29) formed or secured on the vent tube (1) and comprising a widened end (30), while the guide peg (29) and its end (30) are guided with play in the horizontal plane in a guide groove (31) formed in a housing (32).

5. A vent tube according to any one or more of the preceding Claims, characterised in that the free bearing (20) comprises a laterally-protruding arm (22) on which arm at least one fastening device (23) for further tubes (3, 4) is/are formed.

6. A vent tube according to any one or more of the preceding Claims, characterised in that the vent tube (1) and/or the fuel tank (2) is/are produced from synthetic plastics material.

**Revendications**

1. Conduit d'évent pour réservoir de carburant d'un véhicule automobile, qui est placé sur la face supérieure du réservoir, caractérisé en ce que :
    -le conduit d'évent (1) se composant d'un matériau de forme stable est branché par une de ses extrémités (13) au réservoir de carburant (2) par un logement rigide (28) et est fixé à l'extrémité (19) opposée à celle-ci sur le réservoir de carburant (2) par un support détachable (20).

2. Conduit d'évent selon la revendication 1, caractérisé en ce que le conduit d'évent (1) à l'état monté est appliqué par des surfaces d'appui (16 et 18) formées sur sa face supérieure à la carrosserie (24) et par sa face inférieure (27) ou par des surfaces d'appui (25, 26) réalisées sur celle-ci contre la face supérieure du réservoir de carburant (2).

3. Conduit d'évent selon une des revendications 1 ou 2, caractérisé en ce que le logement rigide (28) se compose d'un ajutage de liaison (12) formé ou fixé sur le réservoir de carburant (2), ajutage sur lequel est fixée de façon étanche l'extrémité (13) de forme correspondante du conduit d'évent (1).

4. Conduit d'évent selon une ou plusieurs des revendications précédentes, caractérisé en ce que le support (20) détachable est composé d'un tourillon de guidage (29) formé ou fixé sur le conduit d'évent (1), qui a une extrémité (30) élargie, le tourillon de guidage (29) et son extrémité (30) étant guidés avec du jeu dans une rainure de guidage (31) du logement (32) dans un plan horizontal.

5. Conduit d'évent selon une ou plusieurs des revendications précédentes, caractérisé en ce que le logement détachable (20) comprend un bras (22) s'éloignant latéralement, sur lequel est réalisée au moins un dispositif de fixation (23) pour d'autres conduites (3, 4).

6. Conduit d'évent selon une ou plusieurs des revendications précédentes, caractérisé en ce que le conduit d'évent (1) et/ou le réservoir de carburant (2) sont fabriqués en matière synthétique.

Fig. 1

Fig. 2

Fig. 3